# EUROPÄISCHE PATENTSCHRIFT

(11) **EP 0 577 961 B1**
(45) Veröffentlichungstag und Bekanntmachung des Hinweises auf die Patenterteilung: **16.07.1997**
(21) Anmeldenummer: 93108459.4
(22) Anmeldetag: 26.05.1993
(51) Int. Cl.: B60G 11/40, B60G 5/053

(54) **Verbindung zwischen den Blattfedern und Achslagern bei einem Doppelachsaggregat eines Nutzfahrzeuges**
Assembly for connecting the leaf springs and axles of a tandem-axle unit for heavy-duty vehicles
Connexion entre les ressorts à lames et les essieux dans une unité d'essieux en tandem d'un véhicule utilitaire

(30) Priorität: 04.07.1992 DE 4221996
(43) Veröffentlichungstag der Anmeldung: 12.01.1994
(73) Patentinhaber: MAN Nutzfahrzeuge Aktiengesellschaft, 80976 München (DE); Mündener Gummiwerk GmbH, D-34346 Hannoversch Münden (DE)
(72) Erfinder: Stummer, Josef, Dipl.-Ing. (FH), W-8000 München 45 (DE); Reichardt, Peter, Dipl.-Ing. (FH), W-7140 Ludwigsburg (DE)

(56) Entgegenhaltungen:
- WO-A-91/11636
- DE-A- 4 233 106
- DE-C- 943 932
- DE-U- 1 941 590
- FR-A- 1 138 159
- GB-A- 1 170 150
- US-A- 2 210 499
- US-A- 3 195 876
- US-A- 5 020 824
- US-A- 5 046 756
- US-A- 5 078 420
- US-A- 5 119 543

## Beschreibung

Die Erfindung betrifft eine Verbindung zwischen den Blattfedern und den Achslagern bei einem Doppelachsaggregat eines Nutzfahrzeuges, insbesondere eines Lastkraftwagens gemäß dem Oberbegriff der Ansprüche 1 und 2.

Derartige Verbindungen sind in unterschiedlichen Ausführungsbeispielen bekannt. So ist ein Federsattel Stand der Technik, bei dem die Stahlblattfeder auf Stahl aufliegt. Hier ergeben sich verschiedene Nachteile, indem Anschlaggeräusche beim Springen von Achsen im Teillastbereich immer wieder zu Beschwerden über große Lärmbelastungen führen, weiterhin Quietschgeräusche bei Relativbewegungen zwischen Pendelblattfeder und Achse entstehen, und ebenso eine Komfortverminderung durch Losbrechkräfte und ruckartige Bewegungen in diesem Bereich gegeben sind. Desweiteren sind, ähnlich wie bei Einzelrad-Blattfedern, Pendelverbindungen von Blattfedern am hinteren Lagerpunkt bekannt. Hier entsteht ein hoher Platzbedarf der zu Einschränkungen des Bauraumes oberhalb der Rahmenlängsträger führt. Die Beanspruchung - vor allen Dingen in den Federaugen - ist so enorm groß, daß vor allen Dingen bei Baustelleneinsatz aufgrund großer Verwindungsanteile die Federaugen nicht mehr mit einfachen Mitteln haltbar gemacht werden können.

Eine weitere Verbindung zwischen Blattfedern und Achslagern ist aus der DE 36 34 426 C2 bekannt, bei der ein Blattfederstützlager als Gummimetallverbindung mit die Gummisegmente unterteilenden Lamellen vorgesehen ist. Bei dieser Bauart ergeben sich Platzprobleme im Zusammenhang mit der Gesamthöhe des Turmes zwischen Feder und Achse. Weiterhin ist die Montage derartiger Elemente bei unbelasteter Feder schwierig, da ein relativ hohes Biegemoment aufgebracht werden muß. Darüber hinaus müssen in aller Regel derartige Lamellendruckfedern mit zusätzlichen Sicherungen gegen Ausknicken ausgerüstet werden, die typische Verschleiß- und Zerstörteile darstellen.

Die US 5,046,756 zeigt eine Verbindung zwischen den Blattfedern und den Achslagern eines Doppelachsaggregates eines Nutzfahrzeuges mit einem elastischen Federsattel.

Hierbei ist eine Blattfeder des Blattfederpaketes ober- und unterseitig von mit an der Blattfeder anliegenden Metallplatten bestückten Gummipuffern eingefaßt, die fest an den jeweiligen Achsen angeordnet sind. Die Blattfeder ist endseitig mit einem Loch versehen und über dieses zwischen ober- und unterseitigem Federsattel mittels eines innerhalb des Gummipuffers und der Metallplatten gelagerten Zapfens fixiert.

Aus der US 2,210,499 ist eine nichtelastische Verbindung zwischen den Blattfedern und Achslagern bei einem Doppelachsaggregat bekannt, die ein gewölbtes, nicht-elastisches Gleitelement zwischen Federsattel und Unterseite der Blattfeder aufweist.

Aus der US 5,078,420 ist eine elastische Verbindung zwischen den Blattfedern und Achslagern bei einem Doppelachsaggregat bekannt, bei der ein an der Unterseite der Blattfedern fest angeordneter Federanker beweglich in einer mit den Achsen fest verbundenen elastischen, in etwa komplementär zu dem Federanker ausgebildeten Dämpfereinheit aufgenommen ist.

Der Erfindung liegt die Aufgabe zugrunde, ein verschleißarmes Verbindungselement zwischen den Blattfedern und dem Achslager in gedrungener Bauart und mit minimiertem Geräuschpegel bei allen Betriebsverhältnissen zu schaffen.

Diese Aufgabe wird erfindungsgemäß durch die kennzeichnenden Merkmale der Ansprüche 1 oder 2 gelöst, wobei gemäß den Merkmalen des Anspruches 1 ein Federsattel auf dem Oberteil eines Achslagers befestigt ist und an der Unterseite eines Federendes abrollt, während gemäß den Merkmalen des Anspruches 2 ein Federsattel an der Unterseite eines Federendes befestigt ist und auf einem Oberteil eines Achslagers abrollt.

In einer ersten Bauart ist der Federsattel mittels eines fest auf dem Oberteil des Achslagers angeordneten, separaten Einfaßteiles auf dem Achslager befestigt. Der Federsattel kann gemäß einer weiterführenden Ausgestaltung der Erfindung aus einer fest mit dem Oberteil des Achslagers verbundenen Grundplatte mit einem darauf aufvulkanisierten, elastischen Element, vorzugsweise aus Gummi, einem diesem aufvulkanisierten, schalenförmigen Einfaßteil und einem auf diesem fest angeordneten, gewölbten Abrollkörper bestehen. Der gewölbte Abrollköprer kann fest von dem schalenförmigen Einfaßteil aufgenommen sein.

Dieser Anordnung, bei der der Federsattel auf der Oberseite des Achslagers befestigt ist und an der Unterseite des Federendes abrollt, steht die kinematische Umkehrung gegenüber, bei der der Federsattel an der Unterseite des Federendes befestigt ist und auf der Oberseite des Achslagers abrollt. Bei letzterem ist der Federsattel mittels eines ihm integrierten schalenförmigen Einfaßteiles einenendes an der Unterseite des Federendes befestigt. Der Federsattel kann gemäß einer weiterführenden Ausgestaltung der Erfindung aus einem, als Grundplatte ausgebildeten, schalenförmigen Einfaßteil gebildet sein, auf das einenendes ein elastisches Element, vorzugsweise aus Gummi aufvulkanisiert ist. Auf dieses kann ein zusätzliches schalenförmiges Einfaßteil aufvulkanisert sein, auf diesem ein gewölbter Abrollkörper zur Anlage an der Oberseite des Achslagers angeordnet ist. .

Durch die erfindungsgemäße Anbringung und Ausgestaltung des Federsattels ist eine wartungsfreie und verschleißarme Verbindung zwischen Blattfeder und Achse bei Doppelachsaggregaten gegeben, die durch geschickte Abstimmung und Auswahl von Teilfunktionen zu einem sehr einfachen Bauteil mit geringstmöglichem Platzbedarf führt. Dabei ist zudem eine optimale Geräuschabkopplung zwischen Achsen und Rahmen erzielt, und die Weiterleitung von Abrollgeräuschen von der Fahrbahn sowie von Triebwerksgeräuschen wirkungsvoll unterbrochen. Zusätzlich werden noch Anschlag- und Quietschgeräusche vermieden. Die erfindungsgemäße Bauweise trägt auch zur Straßenschonung bei, und zwar durch den Abbau von Losbrechkrätten bei Relativbewegungen zwischen Achsen und Federn und bei gleichzeitigem Abbau von reinen Druckkräften über eine zusätzliche progressive Druckfeder.

Auch Fahrzeugkomponenten werden im wesentlichen Maße geschont und ihre Lebensdauer erhöht, und zwar wird die Tordierbeanspruchung in der Blattfeder selbst herabgesetzt. Damit steigt die Lebensdauer der Feder beträchtlich wie auch durch Verminderung von Tordiermomenten in der Feder das Federlager ganz wesentlich entlastet wird.

Das elastische Element, vorzugsweise aus Gummi, biegt und schiebt bei kleinen Relativbewegungen zwischen Feder und Achse rein im molekularen Bereich. Dies bringt für kleine Verformungen, die in aller Regel bei Gleitverbindungen mit Komforteinbußen einhergehen (Losbrechkräfte erzeugen immer eine Beschleunigungsspitze und eine Frequenzverschiebung im gesamten Federsystem), in jedem Falle eine deutliche Komfortverbesserung, wie sie typisch für die Molekularverformung von gummielastischen Elementen ist. Bei großen Bewegungen, wie sie z. B. beim Pendeln der Achsen im Gelände stattfinden, wird die Schubbewegung über Anschlagpuffer begrenzt. Dann erfolgt die weitere Deformation über Gleiten zwischen Abrollkörpern und Blattfeder bzw. bei Anbringung des Elementes an der Blattfeder zwischen Abrollkörper und Achslager. Hierbei wird auf wesentliche Bedingungen langlebiger Gleitverbindungen - geringes Produkt aus spezifischer Beanspruchung und Geschwindigkeit - ganz besonders eingegangen. Derartig großhubige Wege finden im Normalfall mit sehr niedriger Geschwindigkeit statt. Dies ergibt eine große Lebensdauer. Gleichzeitig wird durch die Gleitverbindung auch die Beanspruchungseinleitung zwischen den beiden zu verbindenden Bauelementen durch Kraftbegrenzung reduziert. Geräusch- und Schwingungsunterbrechung finden über Dämmung und Dämpfung in einem ausreichend großen Maße statt. Geräuschübertragung in diesem Bereich finden immer im mittel- bis höherfrequenten Geschwindigkeitsbereich aus Reifenabrollgeräuschen bzw. typischen Motor- und Verzahnungsgeräuschen statt, die nicht in den niederfrequenten Bereich fallen.

Unabhängig von der Ausführungsart führt die niedrige Bauhöhe des erfindungsgemäßen elastischen Federsattels zu weiteren Optimierungen. Diesbezüglich sind die Drehlager und Auflageflächen der Blattfeder in einem weitaus größeren Umfang variierbar als das z. B. bei Verwendung der Gummilamellen-Druckfeder möglich ist. Zudem können die Pendelbewegungen bei niedrigen elastischen Elementen völlig ohne Beeinträchtigung des oberhalb des Rahmenlängsträgers liegenden Bauraum erfolgen.

In weiterer Ausgestaltung der Erfindung kann das elastische Element durch ein einvulkanisiertes Zwischenblech in zwei Parzellen unterteilt sein, wodurch ein zusätzlicher Stabilisierungseffekt erzielt werden kann.

In weiterer Ausgestaltung der Erfindung kann auf der Randaußenseite des schalenförmigen Einfaßteiles ein umlaufender, elastischer Streifen in Pufferfunktion vorgesehen sein. Mittels diesem wird ein hartes und metallisch lautes Anschlagen an die vorhandenen Begrenzungselemente weitgehend vermieden. Des weiteren kann zwischen dem schalenförmigen Einfaßteil und dem Zwischenblech eine Dichtung vorgesehen sein. Des weiteren kann eine Innenwand des separaten Einfaßteiles im Abstand zu den Teilen des Federsattels und in etwa deren gegenüberliegender Außenkontur ausgestaltet sein. Des weiteren kann bei der Aufbauvariante mit Befestigung des Federsattels auf dem Achslager der Raum zwischen der Innenwand und den Teilen des Federsattels mit einem stark deformierbaren Schaum ausfüllbar sein. Als Schaum kann beispielsweise Polyurethanschaum verwendet sein. Auf diese Weise wird ein Hohlraum, der ansonsten eindringendem Wasser und Schmutz ausgesetzt wäre, geschützt, so daß ein Verschleiß der Bauteile des Federsattels infolge Verschmutzung vermieden wird.

In weiterer Ausgestaltung der Erfindung kann ein oberer Rand des separaten Einfaßteiles als Anschlagbegrenzung für die Plattfeder vorgesehen sein. Damit ist ein absolutes Maß für die mögliche Durchfederung gesetzt.

In weiterer Ausgestaltung der Erfindung kann der Abrollkörper lösbar mit dem schalenförmigen Einfaßteil verbunden sein. Des weiteren kann der Abrollkörper aus Gummi und/oder Kunststoff gefertigt sein. Der Abrollkörper aus Gummi besitzt zudem die positive Eigenschaft, bei langer Schiebebeanspruchung die Grenzfläche durch "Krabbeln" zu entlasten. Durch das konstruktiv vorgegebene einfache Aufliegen der Feder auf dem Gummielement wird eine Verminderung der Beanspruchung der Feder erreicht. Durch das Verbiegen des Gummielementes in allen Richtungen wird, vor allen Dingen bei tordierender Beanspruchung für die Feder, die Belastung vermindert. Gleichzeitig bringt natürlich jede geringere Beanspruchung auch ein günstigeres Verhalten für die Lebensdauer der Bauteile selbst mit sich.

Die Gummigleitfläche ist besonders verschleißarm für die Blattfederoberfläche selbst. Dies ein typisches Merkmal von Gummireibflächen, die bei entsprechender Gegenfläche nur zu einem Blankscheuern aber nicht zu einem Verschleißen des härteren Partners führen. Anders ist dies bei Kunststoff-Abrollkörpern, die in aller Regel auch zum Verschleißen der Blattfeder führen.

Gemäß einer weiterführenden Ausgestaltung der Erfindung kann der Kern des Abrollkörpers aus Gummi gebildet sein, der mit einer dünnen, verschleißarmen Kunststoffschicht ummantelt ist.

In weiterer Ausgestaltung der Erfindung können zwischen den einzelnen Blattfedern Zwischenlagen angeordnet sein.

Die Erfindung ist in zwei Ausführungsbeispielen dargestellt und beschrieben. Es zeigen:
- Fig. 1: einen elastischen Federsattel im Längsschnitt,
- Fig. 2: einen elastischen Federsattel im Querschnitt,
- Fig. 3: einen elastischen Federsattel in der Draufsicht,
- Fig. 4: einen elastischen Federsattel, befestigt auf dem Achslager,
- Fig. 5: einen elastischen Federsattel, befestigt an der Blattfeder,
- Fig. 6: komplettes Blattfederaggregat mit Federsattel im Teilschnitt,
- Fig. 7: komplettes Blattfederaggregat mit Federsattel im Teilschnitt.

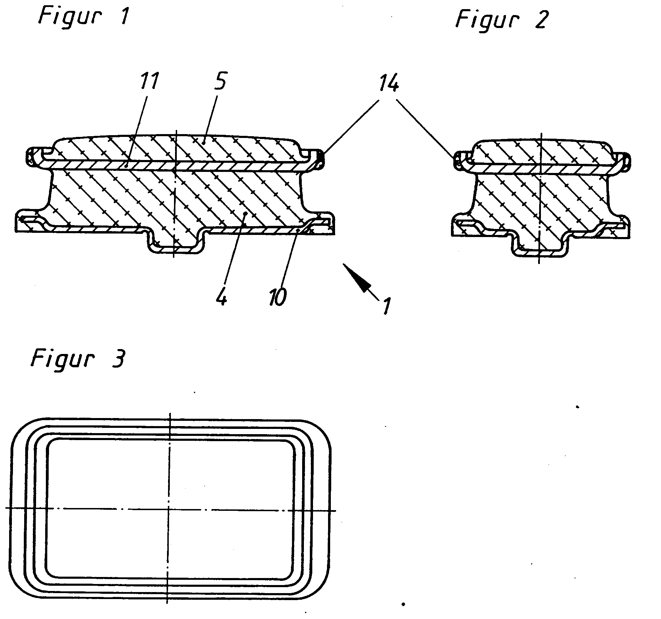

Die Figuren 1, 2 und 3 zeigen einen elastischen Federsattel 1 als Einzelteil, im wesentlichen bestehend aus einer Grundplatte 10, einem elastischen Element 4, einem schalenförmigen Einfaßteil 11, einem gewölbten Abrollkörper 5 und einem elastischen Streifen 14, der umlaufend mit dem hochgezogenen Rand des schalenförmigen Einfaßteiles 11 fest verbunden ist. Die Teile 10, 4 und 11 sind miteinander vulkanisiert, der gewölbte Abrollkörper 5, der aus Gummi oder Kunststoff gebildet ist, ist, z. B. über eine Schraubverbindung, fest mit dem schalenförmigen Einfaßteil 11 verbunden.

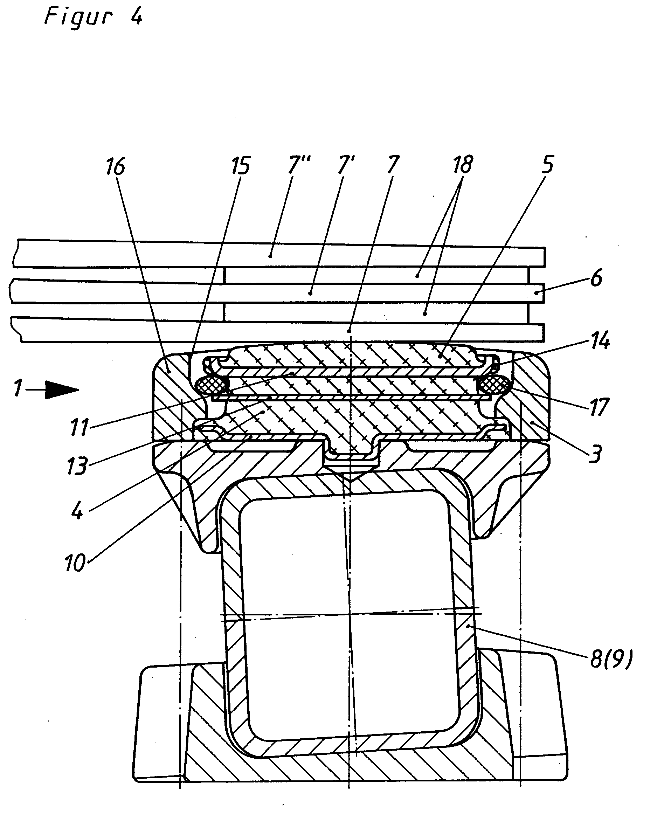

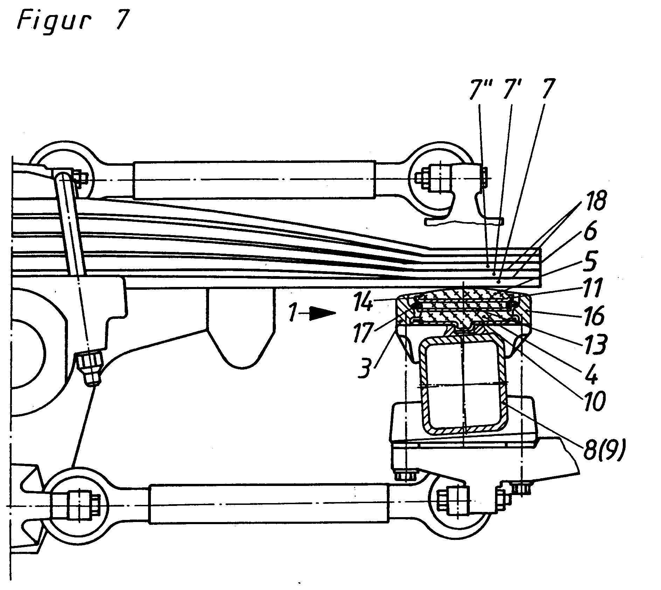

Fig. 4 und Fig. 7 zeigen den elastischen Federsattel 1 in fester Anbindung zum Oberteil 8 des Achslagers 9, wobei das separate Einfaßteil 3 mit dem Oberteil 8 verschraubt ist und im Inneren über eine Nase das elastische Element 4 mit der Grundplatte 10 auf dem Oberteil 8 festklemmt. Das elastische Element 4 ist durch ein Zwischenblech 13 in zwei Segmente unterteilt. Das schalenförmige Einfaßteil 11 wie auch die Grundplatte 10 sind mit den Segmenten des elastischen Elementes 4 zusammenvulkanisiert. Zwischen den überstehenden Rändern des Zwischenbleches 13 und des schalenförmigen Einfaßteiles 11 ist eine umlaufende Dichtung 17 angeordnet. Diese oder ein den ganzen Raum zwischen der inneren Wand 15 des separaten Einfaßteiles 3 und der Außenkontur der Teile 4, 11 und 13 ist mit einem Hartschaum, z. B. Polyurethanschaum, ausgefüllt, so daß dieser gefährdete Raum nicht durch Schmutz beeinträchtigt werden kann. Der gewölbte Abrollkörper 5, der beispielsweise auch einen weichen Gummikern und eine Ummantelung aus einem abriebfesten Kunststoff aufweisen kann, liegt mit seiner gewölbten Gleitfläche an der Unterseite des Federendes 6 der Blattfeder 7 an. Das Blattfederpaket 7, 7', 7'' ist durch Zwischenlagen 18, die vorzugsweise aus Gummibestehen, getrennt.

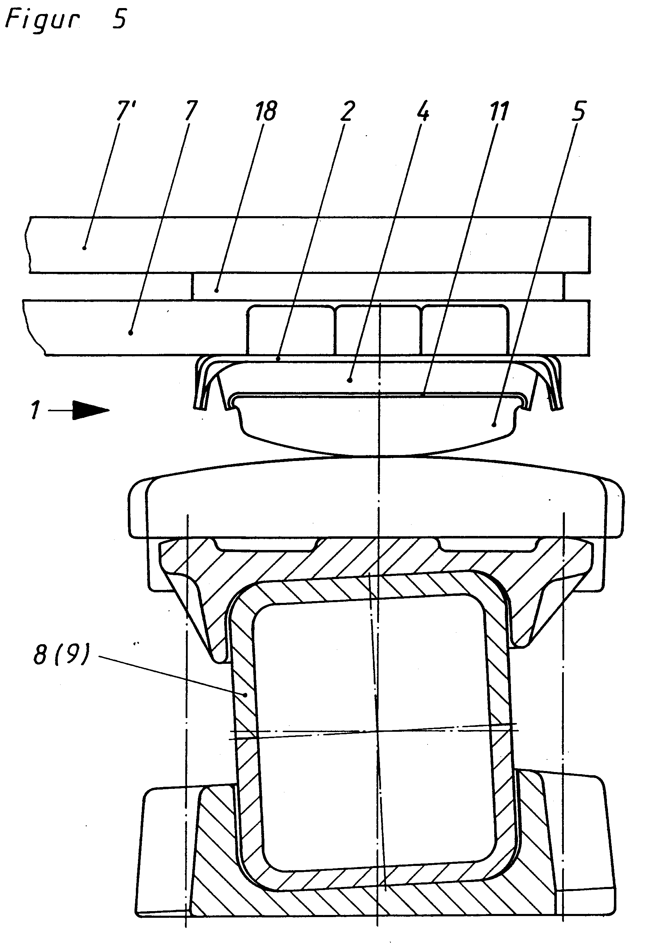

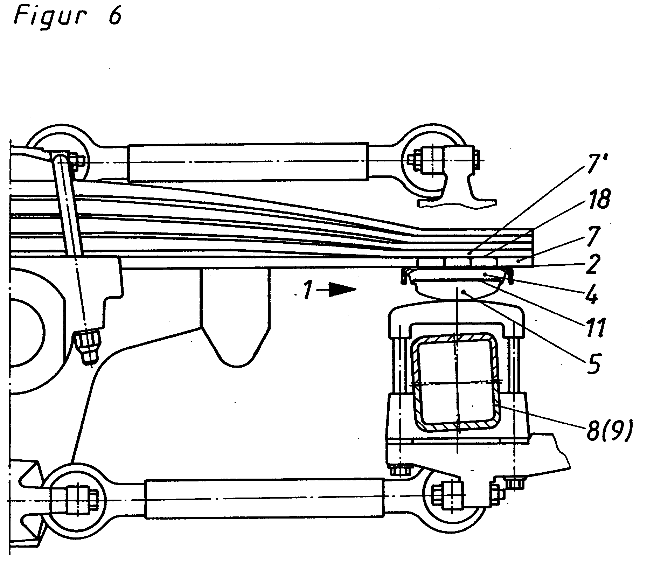

Fig. 5 und Fig. 6 zeigen eine andere Einbauform des elastischen Federsattes 1. Dieser ist am Federende 6 der Blattfeder 7 befestigt. Hierbei ist ein schalenförmiges Einfaßteil 2 als Grundplatte vorgesehen, das dem elastischen Federsattel 1 fest integriert ist, indem das elastische Element 4 mit ihm zusammenvulkanisiert ist. Der im übrigen gemäß den Fig. 1, 2, 3 und 4 ausgebildete elastische Federsattel 1 liegt mit seinem gewölbten Abrollkörper 5 auf dem Oberteil 8 des Achslagers 9 an.

### Bezugszeichenliste

- 1: elastischer Federsattel
- 2: schalenförmiges Einfaßteil als Grundplatte
- 3: separates Einfaßteil
- 2 + 3: Einfaßkörper
- 4: elastisches Element
- 5: Abrollkörper (gewölbtes elastisches Element)
- 6: Federende von 7
- 7: 7, 7', 7'' Blattfeder
- 8: Blattfeder von Oberteil 9
- 9: Achslager
- 10: Grundplatte
- 11: schalenförmiges Einfaßteil
- 12: -
- 13: Zwischenblech
- 14: elastischer Streifen
- 15: Innenwand von 3
- 16: oberer Rand von 3
- 17: Dichtung
- 18: Zwischenlagen

## Patentansprüche

1. Verbindung zwischen den Blattfedern und Achslagern bei einem Doppelachsaggregat eines Nutzfahrzeuges, insbesondere eines Lastkraftwagens, welche einen elastischen Federsattel (1) mit in ihrer Flächenerstreckung größer als in ihrer Tiefenerstreckung dimensionierten, elastischen Elementen (4, 5) und mit die Seitenausdehnung begrenzenden, weitgehend ortsfesten, nicht-elastischen Einfaßkörpern (2, 3, 11) aufweist, wobei der Federsattel (1) einenendes über ein separates Einfaßteil (3) fest mit dem Oberteil (8) des Achslagers (9) verbunden ist, dadurch gekennzeichnet, daß eines der elastischen Elemente (4, 5) ein gewölbter Abrollkörper (5) ist, der eine konvex gewölbte Gleitfläche aufweist, wobei der Federsattel (1) anderenendes mit dieser Gleitfläche an der Unterseite des Federendes (6) der Blatffeder (7) anliegt.

2. Verbindung zwischen den Blattfedern und Achslagern bei einem Doppelachsaggregat eines Nutzfahrzeuges, insbesondere eines Lastkraftwagens, welche einen elastischen Federsattel (1) mit in ihrer Flächenerstreckung größer als in ihrer Tiefenerstreckung dimensionierten, elastischen Elementen (4, 5) und mit die Seitenausdehnung begrenzenden, weitgehend ortsfesten, nichtelastischen Einfaßkörpern (2, 3, 11) aufweist, wobei der Federsattel (1) einenendes über ein Einfaßteil (2) mit einem Federende (6) der Blattfeder (7) fest verbunden ist, dadurch gekennzeichnet, daß eines der elastischen Elemente (4, 5) ein gewölbter Abrollkörper (5) ist, der eine konvex gewölbte Gleitfläche aufweist, wobei der Federsattel (1) anderenendes mit dieser Gleitfläche auf dem Oberteil (8) des Achslagers (9) aufliegt.

3. Verbindung nach Anspruch 1, dadurch gekennzeichnet, daß der gewölbte Abrollkörper (5) fest von einem schalenförmigen Einfaßteil (11) aufgenommen ist und dieses mittels eines darauf aufvulkanisierten, elastischen Elementes (4) mit einer darauf aufvulkansierten Grundplatte (10) verbunden und über diese fest an dem Oberteil (8) des Achslagers (9) angebracht ist.

4. Verbindung nach Anspruch 2, dadurch gekennzeichnet, daß das Einfaßteil (2) des Federsattels (1) schalenförmig ausgebildet ist, einenendes an der Unterseite des Federendes (6) angebracht ist und anderenendes das durch Aufvulkanisierung befestigte elastische Element (4) trägt, und daß auf diesem ein zusätzliches schalenförmiges Einfaßteil (11) aufvulkanisiert ist, auf diesem der gewölbte Abrollkörper (5) angeordnet ist.

5. Verbindung nach einem oder mehreren der vorangegangenen Ansprüche, dadurch gekennzeichnet, daß das elastische Element (4) durch ein einvulkanisiertes Zwischenblech (13) zusätzlich unterteilt ist.

6. Verbindung nach einem oder mehreren der vorangegangenen Ansprüche 1, 3 oder 5, dadurch gekennzeichnet, daß auf der Randaußenseite des schalenförmigen Einfaßteiles (11) ein umlaufender elastischer Streifen (14) in Pufferfunktion vorgesehen ist, und daß zwischen dem schalenförmigen Einfaßteil (11) und dem Zwischenblech (13) eine Dichtung (17) vorgesehen ist, und daß eine Innenwand (15) des separaten Einfaßteiles (3) im Abstand zu den Teilen (4, 11, 13) des Federsattels (1) und in etwa deren gegenüberliegender Außenkontur ausgestaltet ist, und daß der Raum zwischen der Innenwand (15) und den Teilen (4, 11, 13) mit einem stark deformierbaren Schaum ausfüllbar ist.

7. Verbindung nach einem oder mehreren der vorangegangenen Ansprüche, dadurch gekennzeichnet, daß ein oberer Rand (16) des separaten Einfaßteiles (3) als Anschlagbegrenzung für die Blattfeder (7) vorgesehen ist.

8. Verbindung nach einem oder mehreren der Ansprüche 1 bis 7, dadurch gekennzeichnet, daß der Abrollkörper (5) lösbar mit dem schalenförmigen Einfaßteil (11) verbunden ist, und daß der Abrollkörper (5) aus Gummi und/oder Kunststoff gefertigt ist.

9. Verbindung nach Anspruch 8, dadurch gekennzeichnet, daß der Kern des Abrollkörpers (5) aus Gummi gebildet ist, der mit einer dünnen, verschleißarmen Kunststoffschicht ummantelt ist.

10. Verbindung nach einem der Ansprüche 1 oder 2, dadurch gekennzeichnet, daß zwischen den einzelnen Blattfedern (7, 7', 7'') Zwischenlagen (18) angeordnet sind.

## Claims

1. Connection between leaf springs and axle bearings in a twin axle unit in a commercial vehicle, particularly a truck, which connection has an elastic spring pivot seat (1) with elastic elements (4, 5) which are larger in respect of their surface extension than in respect of their depth-related extension and with largely stationary, non-elastic enclosure parts (2, 3 11) limiting the lateral extension, the spring pivot seat (1) being firmly connected at one end to the upper part (8) of the axle bearing (9) via a separate enclosure part (3), characterised in that one of the elastic elements (4, 5) is a curved rolling body (5) having a convex sliding face, whereby on the other end the spring pivot seat (1) contacts the bottom side of the spring end (6) of the leaf spring (7) with this sliding face.

2. Connection between leaf springs and axle bearings in a twin axle unit in a commercial vehicle, particularly a truck, which connection has an elastic spring pivot seat (1) with elastic elements (4, 5) which are larger in respect of their surface extension than in respect of their depth-related extension and with largely stationary, non-elastic enclosure parts (2, 3 11) limiting the lateral extension, the spring pivot seat (1) being firmly connected at one end to the spring end (6) of the leaf spring (7) via an enclosure part (2), characterised in that one of the elastic elements (4, 5) is a curved rolling body (5) having a convex sliding face, whereby the other end of the spring pivot seat (1) contacts the upper part (8) of the axle bearing (9) with this sliding face.

3. Connection according to Claim 1, characterised in that the curved rolling body (5) is firmly set in a shell-type enclosure part (11) which is, via an elastic element (4) vulcanised on to said enclosure part (11), connected to a base plate (10) vulcanised on to said elastic element (4) and is firmly attached to the upper part (8) of the axle bearing (9) via said base plate (10).

4. Connection according to Claim 2, characterised in that the enclosure part (2) of the spring pivot seat (1) is shell-shaped and attached at one end to the bottom side of the spring end (6) and carries at the other end the elastic element (4) attached by means of vulcanisation, and that an additional shell-shaped enclosure part (11) is vulcanised on to said elastic element (4), on which additional shell-shaped enclosure part (11) the curved rolling body (5) is located.

5. Connection according to one or' more of the foregoing Claims, characterised in that the elastic element (4) is additionally subdivided by means of an intermediate plate (13) vulcanised in between.

6. Connection according to one or more of the foregoing Claims 1, 3 or 5, characterised in that a continuous elastic strip (14) working as a buffer is provided on the outside of the edge on the shell-shaped enclosure part (11), and that a seal (17) is provided between the shell-shaped enclosure part (11) and the intermediate plate (13), and that an inner wall (15) of the separate enclosure part (3) is placed at a distance relative to the parts (4, 11, 13) of the spring pivot seat (1) and shaped roughly like the outer contour of said parts (4, 11, 13) facing it and that the space between the interior wall (15) and the parts (4, 11, 13) can be completely filled up with highly deformable foam.

7. Connection according to one or more of the foregoing Claims, characterised in that an upper edge (16) of the separate enclosure part (3) is provided as a stop for the leaf spring (7).

8. Connection according to one or more of the Claims 1 to 7, characterised in that the rolling body (5) is detachably connected to the shell-shaped enclosure part (11), and that the rolling body (5) is made of rubber and/or synthetic material.

9. Connection according to Claim 8, characterised in that the core of the rolling body (5) is made of rubber coated with a thin, low-wear layer of synthetic material.

10. Connection according to one of the Claims 1 or 2, characterised in that intermediate layers (18) are provided between the individual leaf springs (7, 7', 7'').

## Revendications

1. Liaison entre les ressorts à lames et les supports d'essieu dans le cas d'un corps à double essieu d'un véhicule utilitaire, en particulier d'un véhicule utilitaire, qui présente une selle élastique de ressort (1) avec des éléments élastiques (4, 5) dimensionnés de façon plus grande dans leur étendue superficielle que dans le sens de la profondeur et avec des corps d'enchâssement (2, 3, 11) non élastiques, largement fixes, limités dans leur extension latérale, la selle de ressort (1) étant reliée à une extrémité au moyen d'une pièce d'enchâssement(3) séparée de façon solidaire à la partie supérieure (8) du support de l'essieu (9),
caractérisée en ce que
l'un des éléments élastiques (4, 5) est un corps bombé de roulement (5), qui présente une surface de glissement, bombée de façon convexe, la selle de ressort (1) reposant à l'autre extrémité par cette surface de glissement sur la face inférieure de l'extrémité (6) des ressorts à lames (7).

2. Liaison entre les ressorts à lames et les supports d'essieu dans le cas d'un corps à double essieu d'un véhicule utilitaire, en particulier d'un camion, qui présente une selle élastique de ressort (1) avec des éléments élastiques (4, 5) dimensionnés de façon plus grande dans leur étendue superficielle que dans le sens de la profondeur et avec des corps d'enchâssement (2, 3, 11) non élastiques, largement fixes, limités dans leur extension latérale, la selle de ressort (1) étant reliée de façon solidaire à une extrémité au moyen d'une pièce d'enchâssement (2) à une extrémité (6) des ressorts à lames (7),
caractérisée en ce que
l'un des éléments élastiques (4, 5) est un corps convexe de roulement (5), qui présente une surface de glissement bombée de façon convexe, la selle de ressort (1) reposant à l'autre extrémité par cette surface de glissement sur la partie supérieure (8) du support de l'essieu (9).

3. Liaison selon la revendication 1,
caractérisée en ce que
le corps bombé de roulement (5) est reçu de façon solidaire par une pièce d'enchâssement (11) en forme de coquille et celle-ci est reliée au moyen d'un élément élastique (4), vulcanisé dessus, à une plaque de base (10), vulcanisée dessus et est mise au moyen de celle-ci de façon solidaire sur la partie supérieure (8) du support de l'essieu (9).

4. Liaison selon la revendication 2,
caractérisée en ce que
la pièce d'enchâssement (2) de la selle de ressort (1) est constituée en forme de coquille, est mise à une extrémité sur la face inférieure de l'extrémité du ressort (6) et porte à l'autre extrémité l'élément élastique (4) fixé par vulcanisation, et en ce que l'on vulcanise sur celui-ci une pièce d'enchâssement (11) en forme de coquille additionnelle, sur laquelle est disposé le corps bombé de roulement (5).

5. Liaison selon l'une des revendications précédentes,
caractérisée en ce que
l'élément élastique (4) est subdivisé par une tôle intermédiaire (13) vulcanisée dedans.

6. Liaison selon l'une des revendications précédentes 1, 3 ou 5,
caractérisée en ce que
l'on prévoit sur le bord extérieur de la pièce d'enchâssement (11) en forme de coquille une bande élastique (14) qui fait tout le tour et fait fonction de tampon et en ce qu'entre la pièce d'enchâssement en forme de coquille (11) et la tôle intermédiaire (13) on prévoit un joint d'étanchéité (17), et en ce que l'on forme une paroi intérieure (15) de la pièce d'enchâssement séparée (3) à une certaine distance par rapport aux parties (4, 11, 13) de la selle de ressort (1) et à peu près par rapport à ses contours extérieurs opposés, et en ce que l'on peut remplir l'espace compris entre la paroi intérieure (15) et les parties (4, 11, 13) d'une mousse fortement déformable.

7. Liaison selon une ou plusieurs des revendications précédentes,
caractérisée en ce que
l'on prévoit un bord supérieur (16) de la pièce d'enchâssement séparée (3) en tant que limite de butée pour les ressorts à lames (7).

8. Liaison selon une ou plusieurs des revendications précédentes 1 à 7,
caractérisée en ce que
le corps de roulement (5) est relié de façon amovible à la pièce d'enchâssement (11) en forme de coquille et en ce que le corps de roulement (5) est fabriqué en caoutchouc et/ou en matière plastique.

9. Liaison selon la revendication 8,
caractérisée en ce que
le coeur du corps de roulement (5) est en caoutchouc, coeur qui est enveloppé d'une mince couche de matière plastique à faible usure.

10. Liaison selon l'une des revendications 1 ou 2,
caractérisée en ce que
l'on dispose entre les différents ressorts à lames (7, 7', 7'') des couches intermédiaires (18).
